# EUROPÄISCHE PATENTSCHRIFT

(11) **EP 2 355 971 B1**
(45) Veröffentlichungstag und Bekanntmachung des Hinweises auf die Patenterteilung: **11.07.2012**
(21) Anmeldenummer: 09801385.7
(22) Anmeldetag: 18.11.2009
(51) Int. Cl.: B29C 59/04, B32B 37/10, B32B 38/06, B30B 5/06

(54) **Verfahren und Maschine zur Herstellung eines Mikrostrukturen beinhaltenden Materialbandes**
Method and machine for producing a material strip comprising microstructures
Procédé et machine pour la fabrication d'une bande de matériau contenant des microstructures

(30) Priorität: 11.12.2008 DE 102008061879
(43) Veröffentlichungstag der Anmeldung: 17.08.2011
(73) Patentinhaber: MELZER MASCHINENBAU GmbH, 58332 Schwelm (DE)
(72) Erfinder: MELZER, Rainer, 58332 Schwelm (DE); MELZER, Roland, 58332 Schwelm (DE)
(74) Vertreter: Döpp, Ludger
(86) Internationale Anmeldenummer: PCT/DE2009/001659
(87) Internationale Veröffentlichungsnummer: WO 2010/066228

(56) Entgegenhaltungen:
- DE-A1- 10 316 695
- DE-A1- 19 950 474
- US-A1- 2009 087 506

## Beschreibung

Die Erfindung betrifft ein Verfahren zur Herstellung eines Mikrostrukturen beinhaltenden Materialbandes.

Die DE 199 50 474 A1 betrifft eine Vorrichtung zum abschnittsweisen Laminieren eines Schichtaufbaus aus mindestens zwei Kunststoffbändern mit aufeinanderfolgend ausgebildeten Nutzen zur Herstellung von Kunststoffkarten entlang einer Förderstrecke, umfassend aufeinanderfolgend angeordnete Heiz- und Kühleinrichtungen, die von einzelnen temperierbaren, eine ganzzahlige Anzahl Nutzen aufnehmenden Pressorganen gebildet werden, die auf einem gemeinsamen Träger angeordnet sind und jeweils einen feststehenden unteren sowie einen beweglichen oberen Pressbalken aufweisen und in einer Fördereinrichtung intermittierend antreibbaren, einander zugekehrten Pressbändertrums, mittels denen die dazwischen angeordneten Kunststoffbänder abschnittsweise durch die Heiz- und Kühleinrichtungen bewegbar sind.

Der DE 10 2006 001 700 A1 ist ein Verfahren zur Herstellung eines Dokuments mit einer Nummerierung, insbesondere einer laminierten Karte oder dergleichen zu entnehmen, wobei die Nummerierung auf einem Druckbogen im Mehrfachnutzen aufgebracht wird und das Dokument nachfolgend laminiert wird. Druckbogen können mit einer Vielzahl von Einzeldokumenten versehen werden. Beim Aufbringen von Nummerierungen in einer Heiz-, Press- und Kühlmittel beinhaltenden Maschine kann es geschehen, dass der jeweilige Bogen sich zunächst ausdehnt und anschließend wieder schrumpft. Somit wird unnötiger Ausschuss dadurch erzeugt, dass durch die Aufheiz- und Kühlphasen die aufzubringenden Nummerierungen nicht immer an der gleichen Stelle der zu erzeugenden Dokumente aufgebracht werden.

Durch die DE 103 16 695 A1 ist ein Verfahren zur Herstellung eines Laminats bekannt geworden, beinhaltend folgende Schritte
- Zuführen einer Trägerplatte oder einer Trägerbahn zu einer Beschichtungsstation
- Ausrichten eines harzgetränkten Dekorpapiers relativ zu einer Prägestruktur an einem Pressband
- Auflegen und vorläufiges Fixieren des Dekorpapiers auf der Trägerplatte oder der Trägerbahn und
- Zuführen der Einheit aus Dekorpapier und Trägerplatte oder Trägerbahn zu dem umlaufenden Pressband mit der Prägestruktur unter gleichzeitiger Prägung und Aushärtung des Laminats.

Der Erfindung liegt die Aufgabe zugrunde, ein Verfahren zur Herstellung eines Mikrostrukturen beinhaltenden Materialbandes bereit zu stellen, in oder auf welches die Mikrostrukturen, insbesondere sicherheitsrelevante Merkmale, in einfacher Form passgenau ein- oder aufgebracht werden können.

Des Weiteren soll eine Maschine zur Herstellung von, Mikrostrukturen beinhaltenden Materialbändern bereitgestellt werden, die einfach im Aufbau ist und mit welcher die jeweiligen Mikrostrukturen passgenau in die Materialbänder ein- oder aufgebracht werden können, so dass bei später zur erzeugenden Dokumenten die Mikrostrukturen stets an gleicher Stelle vorgesehen sind.

Diese Aufgabe wird gelöst durch ein Verfahren zur Herstellung eines, Mikrostrukturen beinhaltenden, Materialbandes, indem mindestens ein aus zwei parallel zueinander in ausgerichteter Form verlaufenden Bändern gebildetes Materialband durch eine, zumindest Heiz-, Press- und Kühlmittel enthaltende, Maschine hindurchgeführt wird, wobei Transportmittel für das Materialband mit Elementen bestückt werden, die ein die jeweiligen Mikrostrukturen beinhaltendes Profil aufweisen und dieses Profil im Verlauf des Heiz- und Pressvorganges auf dem Materialband abgebildet wird.

Vorteilhafte Weiterbildungen des Erfindungsgegenstandes sind den verfahrensgemäßen Unteransprüchen zu entnehmen.

Diese Aufgabe wird bei einer Maschine zur Herstellung eines, Mikrostrukturen beinhaltenden Materialbandes, mit mindestens einem Heiz-, Press- und Kühlmittel, mindestens einem Transportmittel für ein aus mindestens zwei parallel zueinander in ausgerichteter Form verlaufenden Bändern gebildetes Materialband, auch dadurch gelöst, dass das Transportmittel zur Aufnahme von Profile aufweisenden segmentartig ausgebildeten Elementen zur Erzeugung der jeweiligen Mikrostruktur vorgesehen ist.

Vorteilhafte Weiterbildungen der erfindungsgemäßen Maschine sind den zugehörigen gegenständlichen Unteransprüchen zu entnehmen.

Die Mikrostrukturen, insbesondere die sicherheitsrelevanten Merkmale, können sowohl durch Erhebungen als auch durch Vertiefungen unterschiedlichster Konturen gebildet sein, die auf dem/den Segment(en) vorgesehen sind.

Mit dem erfindungsgemäßen Verfahren, respektive der erfindungsgemäßen Maschine, ist es nun möglich, Mikrostrukturen beinhaltende Materialbänder, insbesondere mit sicherheitsrelevanten Merkmalen versehene, zumindest zweilagige laminierte Materialbänder zur Herstellung von Dokumenten oder dergleichen zu erzeugen. Die vorzugsweise aus Kunststoff, wie z.B. Polycarbonat oder Polyester, bestehenden Materialbänder können je nach Einsatzfall mit einer Vielzahl, gegebenenfalls unterschiedlicher Schichten (Bändern), ausgestattet sein. Je nach Anwendungsfall wird auf mindestens einer der Schichten das, respektive die sicherheitsrelevanten Merkmal(e), abgebildet. Die durch Temperatur und Druck in die jeweilige Schicht eingebrachten Mikrostrukturen werden insbesondere darin eingeprägt, wobei erhabene oder eingedrückte Bereiche in der jeweiligen Schicht erzeugt werden.

Durch der Maschine vorgelagerte und nachgeschaltete Einrichtungen kann ein vollautomatischer Betrieb dergestalt realisiert werden, dass mindestens zwei

Einzelbänder zu einem Materialverbund (Materialband) zusammengeführt werden, der mittels der Transportmittel durch die Heiz-, Press- und Kühlmittel der Maschine hindurchgeführt wird, wobei hier die Mikrostrukturen in oder auf die Bandoberfläche ein- oder aufgebracht werden. Eine nachgeschaltete Einrichtung kann beispielsweise als Zwischenpuffer fungieren, während eine weitere Einrichtung die Vereinzelung der die Mikrostrukturen beinhaltenden Dokumente vornimmt.

Dokumente im Sinne des Erfindungsgegenstandes sind beispielsweise ID-Karten, Bank- und Kreditkarten, Ausweisdokumente, wie Personalausweise, Reisepässe, Führerscheine oder dergleichen.

Die jeweilige Mikrostruktur bzw. die sicherheitsrelevanten Merkmale kann beispielsweise eine MLI- (Multiple Laser Image) oder CLI-Struktur (Changable Laser Image) sein, die als Negativprofil im jeweiligen Segment eingebracht wird. Als Mikrosturkturen werden ebenfalls angesehen: Gravuren, Mikroschriften, Guillochen, Blindenschriften, wie Braille sowie Latent Images oder dergleichen.

Die einzelnen Segmente können in Form eines intermittierend umlaufenden Transportbandes (Abbildungsband) miteinander, beispielsweise durch Schweißen, verbunden werden.

Hier ist jedoch das Problem gegeben, dass es bei der Abnutzung einzelner Segmente zu Problemen führen kann, das abgenutzte Segment auszutauschen, da zunächst einmal die feste Verbindung zwischen einzelnen Systemen gelöst werden muss.

Alternativ wird vorgeschlagen, dass das Transportmittel, welches beispielsweise durch umlaufende Transportketten gebildet sein kann, die Segmente aufnimmt. Selbige können z.B. durch Verschraubung, Verstiftung, Versplintung oder dergleichen mit dem, respektive den Transportmitteln, lösbar verbunden werden. Bei Abnutzung des einen oder anderen Segments kann dieses in einfacher Weise durch Lösen der Verbindung und Austausch des Segments ersetzt werden.

Der Erfindungsgegenstand ist anhand eines Ausführungsbeispiels dargestellt und wird wie folgt erläutert. Es zeigen:
- Figur 1 und 2: Seitenansichten einer erfindungsgemäßen Maschine einerseits mit geschlossenen und andererseits mit geöffneten Pressmitteln;
- Figur 3: Prinzipskizzen einer alternativen erfindungsgemäßen Maschine;
- Figur 4: Prinzipskizzen lösbar miteinander verbundener, Mikrostrukturen beinhaltender Segmente.

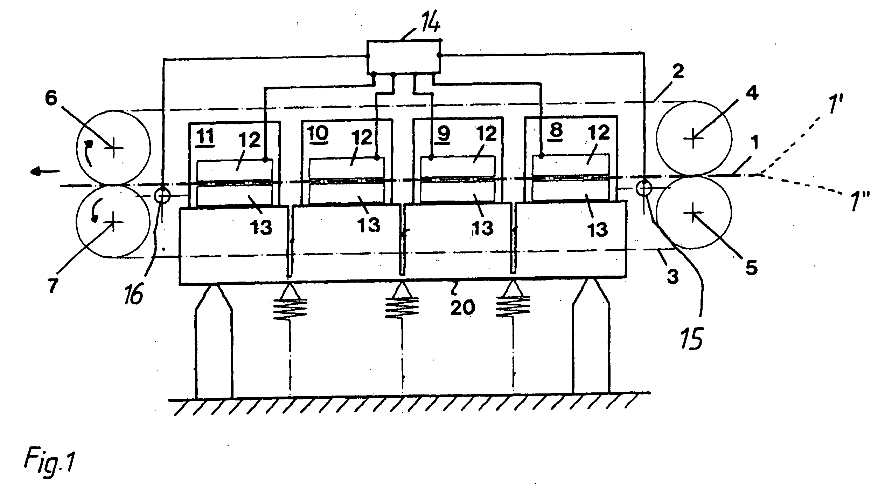

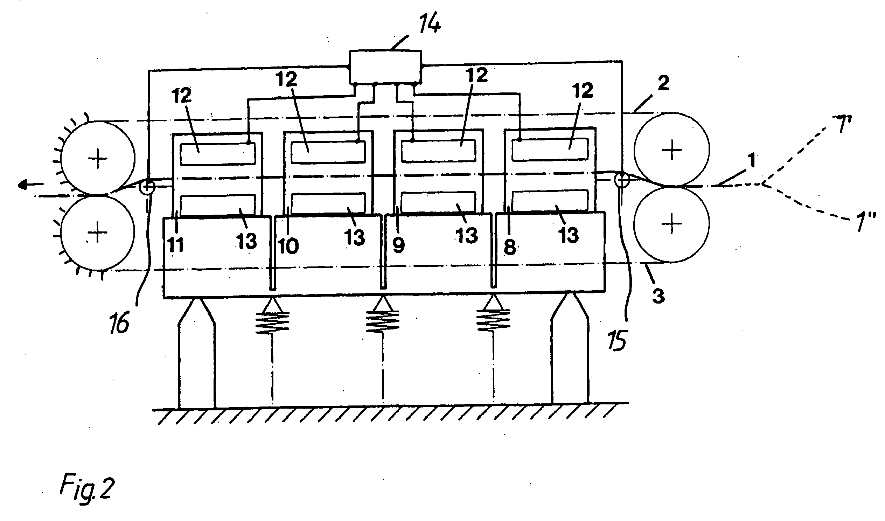

Die Figuren 1 und 2 zeigen eine erfindungsgemäße Maschine beispielsweise zum abschnittsweisen Laminieren eines, in diesem Beispiel durch zwei Kunststoffbänder 1', 1" gebildeten Materialbandes 1 als Teilstation einer Anlage zur Herstellung von Dokumenten entlang einer Förderstrecke. Die auch als Nutzen definierten Kunststoffbänder 1,1" werden von der Maschine vorgelagerten Abrolleinrichtungen zugeführt (nicht dargestellt) und in Pfeilrichtung durch die Maschine transportiert. Die das Materialband 1 bildenden Kunststoffbänder 1',1'' werden synchron zugeführt, wobei die verschiedenen, zu dem Materialband 1 zu laminierenden Kunststoffbänder 1',1'' zuvor unterschiedliche Bearbeitungsstationen durchlaufen ,haben können. Nachdem die mindestens zwei Kunststoffbänder 1',1'' zusammengeführt worden sind, bilden sie das Materialband 1. Das Materialband 1 läuft in einen Spalt zwischen zwei Pressbändertrumen 2,3 ein, die von zwei, in sich geschlossenen einander zugekehrten Transportbändern gebildet sind, die jeweils über eine Einlauftrommel 4,5 und eine Auslauftrommel 6,7 gelegt sind. Mindestens eines der Transportbänder, vorteilhafterweise jedoch beide werden schrittweise angetrieben und nehmen bei ihrer Umlaufbewegung das Materialband 1 mit.

Wie später beschrieben, sind im Bereich der Pressbändertrume 2,3 Mitnahmeelemente für das Materialband 1 vorgesehen, die einen schlupffreien Transport desselben durch die Maschine hindurch gewährleisten. Entlang der Pressbändertrume 2,3 sind aufeinanderfolgende Heizmittel 8,9 und Kühlmittel 10,11 angeordnet, die von einzelnen, temperierbaren Pressorganen gebildet werden. Die Anzahl der hintereinander angeordneten Heizmittel 8,9 und Kühlmittel 10,11 ist wählbar. Die Heizmittel 8,9 und die Kühlmittel 10,11 sind jeweils beabstandet zueinander angeordnet und sind jeweils mit einem oberen Pressbalken 12 und einem unteren Pressbalken 13 ausgebildet. Zwischen dem oberen Pressbalken 12 und dem unteren Pressbalken 13 durchläuft das Materialband 1, geführt zwischen den beiden Pressbändertrumen 2,3, in Pfeilrichtung die erfindungsgemäße Maschine.

Figur 1 zeigt die jeweils zwei Pressbalken 12,13 in einer geschlossenen Stellung der Pressorgane für eine temperierte Druckbehandlung des Materialbandes 1, wobei zumindest der obere Pressbalken 12 nach Art eines Stempels beweglich ist, um eine Druckkraft auf den unteren Pressbalken 13 auszuüben. Wie in den folgenden Figuren näher erläutert, sind die Pressbändertrume 2,3 mit aus Blech bestehenden Segmenten versehen, die ein durch eine Mikrostruktur gebildetes Profil aufweisen, das im Verlauf der temperierten Druckbehandlung auf definierten Abschnitten des Materialbandes 1 abgebildet wird. Nach Beendigung der temperierten Druckbehandlung werden die Pressorgane durch Anheben des jeweils oberen Pressbalkens 12 geöffnet und die Pressbänder 2,3 mit dem abschnittsweise behandelten Materialband 1 in Pfeilrichtung weiterbewegt. Beispielsweise wird der in den Heizmitteln 8,9 behandelte Abschnitt des Materialbandes 1 in den Bereich der Kühlmittel 10,11 bewegt. Zur Aktivierung der Pressbalken 12,13, respektive der Heizmittel 8,9 und der Kühlmittel 10,11, ist eine Steuerung 14 vorgesehen.

Figur 2 zeigt die erfindungsgemäße Maschine gemäß Figur 1 mit geöffneten oberen Pressbalken 12. Die einzelnen Pressorgane sind hinsichtlich ihrer Temperatur und des von Ihnen ausgeübten Druckes individuell einstellbar, wobei das mit der jeweiligen Mikrostruktur versehene Materialband 1 einen stabilen Schichtstoff bildet. Für einen schrittweisen Vorschub des Materialbandes 1 werden die Pressen jeweils geöffnet. Die Dauer der Aufheiz- und Abkühlvorgänge bestimmt die Taktzeiten. Des Weiteren sind Hubeinrichtungen 15,16 im Ein- und Ausgangsbereich der Maschine vorgesehen, die in Bezug auf die Pressbändertrume 2,3 mit einer Vertikalkomponente nach oben bewegbar sind, wie dies Figur 2 zu entnehmen ist.

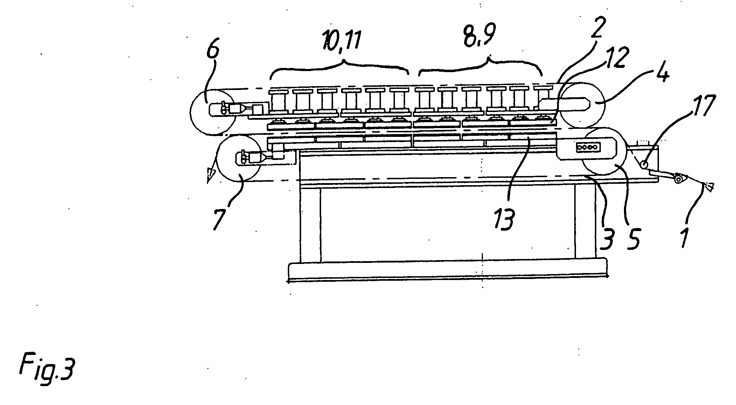

Figur 3 zeigt als Prinzipskizze eine weitere erfindungsgemäße Maschine, die in Analogie zu den Figuren 1 und 2, ebenfalls mit Heiz- 8, 9 und Kühlmitteln 10, 11 ausgerüstet ist. Ebenfalls vorhanden sind obere Pressbalken 12 und untere Pressbalken 13. Die durch blechartige ausgebildete Segmente gebildeten Pressbändertrume 2,3 sind in dieser Prinzipskizze versetzt zueinander angeordnet. In einer nicht näher dargestellten vorgelagerten Einrichtung wurden die in den Figuren 1 und 2 angedeuteten Einzelbänder 1',1'' zu dem Materialband 1 zusammengeführt. Über eine Umlenkrolle 17 wird das Materialband 1 in den Spalt zwischen den Einlauftrommeln 4,5 geführt und durchläuft auf diese Weise, wie in den Figuren 1 und 2 beschrieben, die Förderstrecke (Pfeilrichtung). Das Materialband 1 wird im Bereich der Auslauftrommeln 6,7 seiner weiteren Bestimmung, insbesondere einer Vereinzelungseinrichtung zugeführt. Ähnlich wie in den Figuren 1 und 2 beschrieben, wird auch hier im Bereich der Heizmittel 8,9 in Kombination mit den oberen und unteren Pressbalken 12,13 eine Mikrostruktur an vorgebbarer Stelle des Materialbandes 1 eingebracht.

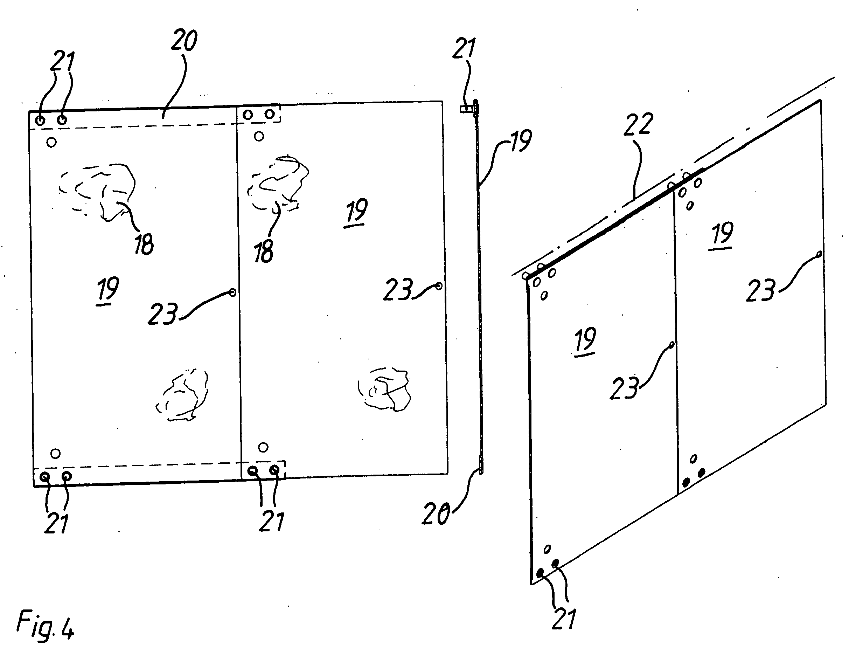

Figur 4 zeigt als Prinzipskizze zwei miteinander verbundene, Mikrostrukturen 18 beinhaltende Segmente 19, die in diesem Beispiel über eine Verbindungsleiste 20 lösbar miteinander in Wirkverbindung stehen. Über stiftartige Verbindungselemente 21 werden die Segmente 19 lösbar miteinander verbunden. Die Verbindungsleiste 20 kann - je nach Anwendungsfall - durch eine nur angedeutete Laschenkette 22 gebildet sein. Lediglich angedeutet sind weitere Ausnehmungen 23, die zur Aufnahme von stiftartigen Mitnahmeelementen dienen, mit welchen korrespondierenden Registertöchern des zu transportierenden Materialbandes in Wirkverbindung gebracht werden. Infolge dieser Mitnahmeelemente wird ein schlupffreier Transport des Materialverbundes gewährleistet. Die Mikrostrukturen 18 werden somit stets an gleichen Stellen auf das bzw. in das Materialband aufgebracht, beispielsweise auf- oder eingeprägt. Nach der Erzeugung von Dokumenten durch Vereinzelung, wie Stanzen oder dergleichen, haben alle so erzeugten Dokumente die ein- oder aufgebrachte Mikrostruktur stets an gleicher Stelle, so dass für die Weiterverarbeitung des Materialverbundes wesentliche Vorteile erzielt werden können.

### Bezugszeichenliste

- 1: Materialband
- 1': Kunststoffband
- 1'': Kunststoffband
- 2: Pressbandtrum
- 3: Pressbandtrum
- 4: Einlauftrommel
- 5: Einlauftrommel
- 6: Auslauftrommel
- 7: Auslauftrommel
- 8: Heizmittel
- 9: Heizmittel
- 10: Kühlmittel
- 11: Kühlmittel
- 12: Pressbalken
- 13: Pressbalken
- 14: Steuerung
- 15: Hubeinrichtung
- 16: Hubeinrichtung
- 17: Umlenkrolle
- 18: Mikrostruktur
- 19: Segment
- 20: Verbindungsleiste
- 21: Verbindungselement
- 22: Laschenkette
- 23: Ausnehmung

## Patentansprüche

1. Verfahren zur Herstellung eines, Mikrostrukturen (18) beinhaltenden, Materialbandes (1), indem mindestens ein aus zwei parallel zueinander in ausgerichteter Form verlaufenden Bändern (1'1") gebildetes Materialband (1) durch eine, zumindest Heiz- (8,9), Press- (12,13) und Kühlmittel (10,11) enthaltende, Maschine hindurchgeführt wird, wobei Transportmittel (2,3) für das Materialband (1) mit Elementen bestückt werden, die ein die jeweiligen Mikrostrukturen (18) beinhaltendes Profil aufweisen und dieses Profil (18) im Verlauf des Heiz- und Pressvorganges auf dem Materialband (1) abgebildet wird.

2. Verfahren nach Anspruch 1, **dadurch gekennzeichnet, dass** das aus Kunststoff bestehende Materialband (1) intermittierend durch die Heiz- (8,9), Press- (12,13) und Kühlmittel (10,11) der Maschine hindurchgeführt wird.

3. Verfahren nach Anspruch 1 oder 2, **dadurch gekennzeichnet, dass** die Transportmittel für das Materialband (1) mit segmentartig ausgebildeten, das jeweilige Profil beinhaltenden Elementen (19) bestückt werden.

4. Verfahren nach einem der Ansprüche 1 bis 3, **dadurch gekennzeichnet, dass** die Segmente (19) zur Bildung eines umlaufenden Abbildungs- und Transportbandes (2,3) fest, insbesondere durch Schweißen, miteinander verbunden werden.

5. Verfahren nach einem der Ansprüche 1 bis 3, **dadurch gekennzeichnet, dass** die Segmente (19) mit dem jeweiligen Transportmittel, insbesondere Transportketten, lösbar verbunden werden.

6. Verfahren nach einem der Ansprüche 1 bis 5, **dadurch gekennzeichnet, dass** das Materialband (1) mit einem Transponder ausgestattet wird.

7. Verfahren nach einem der Ansprüche 1 bis 6, **dadurch gekennzeichnet, dass** in das Materialband (1) eine MLI- oder CLI-Mikrostruktur ein- oder aufgebracht wird.

8. Verfahren nach einem der Ansprüche 1 bis 7, **dadurch gekennzeichnet, dass** in das Materialband (1) mittel- oder unmittelbar nach dem Verlassen der Maschine zu die Mikrostrukturen (18), insbesondere die sicherheitsrelevanten Merkmale, beinhaltenden Dokumenten vereinzelt wird.

9. Maschine zur Herstellung eines, Mikrostrukturen (18) beinhaltenden Materialbandes (1), mit mindestens einem Heiz- (8,9), Press- (12,13) und Kühlmittel (10,11), mindestens einem Transportmittel (2,3) für ein aus mindestens zwei parallel zueinander in ausgerichteter Form verlaufenden Bändern gebildetes Materialband (1), wobei das Transportmittel (2,3) zur Aufnahme von Profile aufweisenden segmentartig ausgebildeten Elementen (19) zur Erzeugung der jeweiligen Mikrostruktur (18) vorgesehen ist.

10. Maschine nach Anspruch 9, **dadurch gekennzeichnet, dass** die durch Blechteile gebildeten Segmente (19) fest, insbesondere durch Schweißen, miteinander verbunden sind.

11. Maschine nach Anspruch 9, **dadurch gekennzeichnet, dass** die durch Blechteile gebildeten Segmente (19) mit den, insbesondere durch Transportketten gebildeten, Transportmitteln lösbar und austauschbar verbunden sind.

12. Maschine nach einem der Ansprüche 9 bis 11, **dadurch gekennzeichnet, dass** das Transportmittel (2,3) das Materialband (1) intermittierend durch die jeweiligen Heiz- (8,9), Press- (12,13) und Kühlmittel (10,11) hindurchführt.

13. Maschine nach einem der Ansprüche 9 bis 12, **dadurch gekennzeichnet, dass** das jeweilige Transportmittel (2,3) durch zwei intermittierend und gegenläufig antreibbare Trume gebildet ist, mit denen das Materialband (1) bewegbar ist, wobei mindestens eines der Trume (2,3) mit den die jeweiligen Profile (18) beinhaltenden, Segmenten (19) ausgerüstet ist.

14. Maschine nach einem der Ansprüche 9 bis 13, **dadurch gekennzeichnet, dass** im Bereich der Transportmittel (2,3) oder der Segmente (19) Mitnahmeelemente für das ein entsprechendes Gegenprofil aufweisende Materialband vorgesehen sind.

15. Maschine nach einem der Ansprüche 9 bis 14, **dadurch gekennzeichnet, dass** die Mitnahmeelemente durch Stifte gebildet sind, die in korrespondierende Ausnehmungen des Materialbandes (1) eingreifen, so dass das Materialband (1) mit gleichmäßig beabstandeten Mikrostrukturen (18), insbesondere sicherheitsrelevanten Merkmalen (18), versehen wird.

## Claims

1. A method for manufacturing a material strip (1) comprising microstructures (18), in that at least one material strip (1) formed by two strips (1', 1'') which extend in parallel with respect to each other in an aligned manner is guided through a machine which comprises at least heating (8, 9), pressing (12, 13) and cooling means (10, 11), wherein transport means (2, 3) provided for the material strip (1) are equipped with elements which comprise a profile comprising the respective microstructures (18) and this profile (18) will be reproduced on the material strip (1) in the course of the heating and pressing operation.

2. A method according to claim 1, **characterized in that** the material strip (1) made of synthetic material will be intermittently guided through the heating (8, 9), pressing (12, 13) and cooling means (10, 11) of the machine.

3. A method according to claim 1 or 2, **characterized in that** the transport means of the material strip (1) are equipped with segment-like elements (19) comprising the respective profile.

4. A method according to one of the claims 1 through 3, **characterized in that** the segments (19) are firmly connected to each other, especially by welding, for forming a revolving reproduction and transport belt (2, 3).

5. A method according to one of the claims 1 through 3, **characterized in that** the segments (19) are detachably connected to the respective transport means, especially conveyor chains.

6. A method according to one of the claims 1 through 5, **characterized in that** the material strip (1) will be equipped with a transponder.

7. A method according to one of the claims 1 through 6, **characterized in that** a MLI or CLI microstructure will be introduced into or applied on the material strip (1).

8. A method according to one of the claims 1 through 7, **characterized in that** the material strip (1) comprising the microstructure (18), especially the security relevant characteristics, will be separated into documents indirectly or directly after leaving the machine.

9. A machine for manufacturing a material strip (1) comprising microstructures (18), comprising at least one heating (8, 9), pressing (12, 13) and cooling means (10, 11), at least one transport means (2, 3) for a material strip (1) formed by at least two strips (1', 1'') which extend in parallel with respect to each other in an aligned manner, wherein the transport means (2, 3) is provided for receiving segment-like elements (19) comprising profiles for producing the respective microstructure (18).

10. A machine according to claim 9, **characterized in that** the segments (19) which are formed by sheet metal parts are firmly connected to each other, especially by welding.

11. A machine according to claim 9, **characterized in that** the segments (19) which are formed by sheet metal parts are connected to the transport means which are in particular formed by conveyor chains in a detachable and exchangeable manner.

12. A machine according to one of the claims 9 through 11, **characterized in that** the transport means (2, 3) guides the material strip (1) intermittently through the respective heating (8, 9), pressing (12, 13) and cooling means (10, 11).

13. A machine according to one of the claims 9 through 12, **characterized in that** the respective transport means (2, 3) is formed by two runs which can be driven intermittently and in counterrotation, by means of which the material strip (1) can be displaced, wherein at least one of the runs (2, 3) is equipped with the segments (19) comprising the respective profiles (18).

14. A machine according to one of the claims 9 through 13, **characterized in that** dog elements for the material strip comprising a corresponding counter-profile are provided in the area of the transport means (2, 3) or the segments (19).

15. A machine according to one of the claims 9 through 14, **characterized in that** the dog elements are formed by pins which engage in corresponding recesses of the material strip (1) such that the material strip (1) is provided with regularly spaced microstructures (18), especially security relevant characteristics (18).

## Revendications

1. Procédé de fabrication d'une bande de matériau (1) comprenant des microstructures (18), en guidant au moins une bande de matériau formée par deux bandes (1', 1 ") qui s'étendent en parallèle l'une par rapport à l'autre d'une manière alignée à travers d'une machine qui comprend au moins des moyens de chauffage (8, 9), de pressage (12, 13) et de refroidissement (10, 11), des moyens de transport (2, 3) de la bande de matériau (1) étant munis des éléments qui comprennent un profil comprenant les microstructures (18) respectives et ce profil (18) étant reproduit sur la bande de matériau (1) au cours de l'étape de chauffage et de pressage.

2. Procédé selon la revendication 1, **caractérisé en ce qu'**on guide la bande de matériau (1) en matière artificielle de manière intermittente à travers les moyens de chauffage (8, 9), de pressage (12, 13) et de refroidissement (10, 11) de la machine.

3. Procédé selon la revendication 1 ou la revendication 2, **caractérisé en ce qu'**on munit les moyens de transport de la bande de matériau (1) des éléments (19) sous forme de segments comprenant le profil respectif.

4. Procédé selon l'une des revendications 1 à 3, **caractérisé en ce qu'**on relie les segments (19) fermement l'un à l'autre, notamment par soudage, pour former une bande reproductrice et transporteuse tournante (2, 3).

5. Procédé selon l'une des revendications 1 à 3, **caractérisé en ce qu'**on relie de manière amovible les segments (19) au moyen de transport respectif, notamment des chaînes de transport.

6. Procédé selon l'une des revendications 1 à 5, **caractérisé en ce qu'**on munit la bande de matériau (1) d'un transpondeur.

7. Procédé selon l'une des revendications 1 à 6, **caractérisé en ce qu'**on introduit ou on applique une microstructure MLI ou CLI dans ou sur la bande de matériau (1).

8. Procédé selon l'une des revendications 1 à 7, **caractérisé en ce qu'**on divise la bande de matériau (1) comprenant la microstructure (18), notamment les caractéristiques relatives à la sécurité, en documents indirectement ou directement après avoir quitté la machine.

9. Machine pour la fabrication d'une bande de matériau (1) comprenant des microstructures (18), comprenant au moins un moyen de chauffage (8, 9), de pressage (12, 13) et de refroidissement (10, 11), au moins un moyen de transport (2, 3) pour une bande de matériau (1) formée par au moins deux bandes qui s'étendent en parallèle l'une par rapport à l'autre d'une manière alignée, le moyen de transport (2, 3) étant prévu pour recevoir des éléments (19) sous forme de segments comprenant des profils pour produire la microstructure (18) respective.

10. Machine selon la revendication 9, **caractérisé en ce que** les segments (19) formés par des pièces en tôle sont fermement reliés les uns aux autres, notamment par soudage.

11. Machine selon la revendication 9, **caractérisé en ce que** les segments (19) formés par des pièces en tôle sont reliés de manière amovible et échangeable aux moyens de transport qui sont notamment formés par des chaînes de transport.

12. Machine selon l'une des revendications 9 à 11, **caractérisé en ce que** le moyen de transport (2, 3) guide la bande de matériau (1) de manière intermittente à travers les moyens de chauffage (8, 9), de pressage (12, 13) et de refroidissement (10, 11) respectifs.

13. Machine selon l'une des revendications 9 à 12, **caractérisé en ce que** le moyen de transport (2, 3) respectif est formé par deux brins entraînables de manière intermittente et en sens opposé, à l'aide desquels on peut déplacer la bande de matériau (1), au moins un des brins (2, 3) étant muni des segments (19) comprenant les profils respectifs (18).

14. Machine selon l'une des revendications 9 à 13, **caractérisé en ce qu'**au niveau des moyens de transport (2, 3) ou des segments (19) on a prévu des éléments d'entraînement pour la bande de matériau comprenant un contre-profil correspondant.

15. Machine selon l'une des revendications 9 à 14, **caractérisé en ce que** les éléments d'entraînement sont formés par des chevilles qui s'engrènent dans des creux correspondants de la bande de matériau (1) de sorte que la bande de matériau (1) est muni des microstructures (18) régulièrement espacées, notamment des caractéristiques (18) relatives à la sécurité.
